# EUROPÄISCHE PATENTSCHRIFT

(11) **EP 4 450 325 B1**
(45) Veröffentlichungstag und Bekanntmachung des Hinweises auf die Patenterteilung: **28.01.2026**
(21) Anmeldenummer: 23169062.9
(22) Anmeldetag: 20.04.2023
(51) Int. Cl.: B60N 2/06, F16H 25/18, F16H 25/02

(54) **LINEARANTRIEB, LÄNGSVERSTELLEINHEIT EINES SITZES UND KRAFTFAHRZEUG**
LINEAR DRIVE, LONGITUDINAL ADJUSTMENT UNIT OF A SEAT AND MOTOR VEHICLE
ENTRAÎNEMENT LINÉAIRE, UNITÉ DE RÉGLAGE LONGITUDINAL D'UN SIÈGE ET VÉHICULE AUTOMOBILE

(43) Veröffentlichungstag der Anmeldung: 23.10.2024
(73) Patentinhaber: IMS Gear SE & Co. KGaA, 78166 Donaueschingen (DE)
(72) Erfinder: Mrewed, Wassem, 78532 Tuttlingen (DE); Werschler, Marco, 78315 Radolfzell (DE); Nietzel, Kenny, 78054 Villingen-Schwenningen (DE); Mittelbach, Marcel, 79859 Schluchsee (DE)
(74) Vertreter: Westphal, Mussgnug & Partner Patentanwälte mbB

(56) Entgegenhaltungen:
- EP-A1- 3 980 668
- WO-A1-2020/245252
- JP-A- 2022 143 776

## Beschreibung

Die vorliegende Erfindung betrifft einen Linearantrieb mit den Merkmalen des Anspruchs 1, eine Längsverstelleinheit für einen Sitz mit den Merkmalen des Anspruchs 22 und ein Kraftfahrzeug mit den Merkmalen des Anspruchs 23.

Linearantriebe sind aus dem Stand der Technik in unterschiedlichen Ausgestaltungen vorbekannt und werden verbreitet als Längsverstelleinheiten zum Verstellen der Position eines Sitzes in Kraftfahrzeugen verwendet. Längsverstelleinheiten wirken typischerweise mit einer an einem Chassis festgelegten Unterschiene und einer innerhalb dieser angeordneten Oberschiene zusammen, wobei die Oberschiene durch die Längsverstelleinheit motorisch verfahrbar ist und mit dem Sitz gekoppelt ist. Das Verstellen der Oberschiene durch die Längsverstelleinheit erfolgt im Stand der Technik typischer Weise mittels einer Spindel, welche innerhalb der Oberschiene angeordnet ist und an ihrem jeweiligen ersten Ende und zweiten Ende abgestützt ist.

Derartige Längsverstelleinheiten sind beispielsweise aus der DE 36 40 197 A1, DE 42 08 948 C2, DE 196 42 655 C2, DE 198 15 283 A1, DE 10 2004 013 009 A1 und DE 10 2006 052 936 A1 bekannt.

Weiteren Stand bilden die Druckschriften JP 2022 143 776 A und die WO 2020 24 52 52 A1.

Aufgrund der hohen Anforderungen an einen Linearantrieb, welcher neben der Verstellfunktion als Längsverstelleinheit auch eine Unfallsicherheit gewährleisten muss, weisen derartige Linearantriebe unterschiedliche Bauformen auf, die unterschiedliche Fertigungsmethoden und Verfahren erfordern. Es hat sich gezeigt, dass eine spielfreie Linearbewegung nur mit hohem Aufwand zu realisieren ist und dass die Bruchlasten nur aufwändig anzupassen sind. Ferner sind bekannte Längsverstelleinheiten nur bedingt bei der Realisierung neuartiger Sitzkonzepte in Fahrzeugen verwendbar.

Hier setzt die vorliegende Erfindung an.

Der Erfindung liegt die Aufgabe zugrunde, einen verbesserten Linearantrieb vorzuschlagen, der in zweckmäßiger Weise die aus dem Stand der Technik bekannten Nachteile beseitigt. Weiterhin soll bevorzugt ein Linearantrieb mit einer besonders kompakten Bauweise angegeben werden, welcher insbesondere eine nahezu spielfreie Linearbewegung bei gleichzeitiger variabler und anpassbarer Bruchlast ermöglicht. Darüber hinaus sollte der vorzuschlagende Linearantrieb eine hohe Verstellgeschwindigkeit realisieren können.

Diese Aufgaben werden durch einen Linearantrieb mit den Merkmalen des Anspruchs 1, eine Längsverstelleinheit mit den Merkmalen des Patentanspruchs 22 sowie mit einem Kraftfahrzeug mit den Merkmalen des Patentanspruchs 23 gelöst.

Der erfindungsgemäße Linearantrieb mit den Merkmalen des Patentanspruchs 1 weist mindestens eine Schiene auf, die entlang einer Längsachse orientiert ist und mindestens eine ein Zahnprofil bildende Kulisse aufweist. Die mindestens eine Kulisse liegt vorzugweise in einer zugehörigen Schienenebene und die Kulisse umfasst zwei gegenüberliegende Profilflächen. Darüber hinaus weist der Linearantrieb mindestens einen Schieber und eine Antriebswelle auf. Der mindestens eine Schieber ist quer zur Längsachse beweglich und greift in die mindestens eine Kulisse, wobei der mindestens eine Schieber mit der Antriebswelle derart trieblich gekoppelt ist, dass der mindestens eine Schieber mindestens eine zyklische Bewegung im Verlauf einer Umdrehung der Antriebswelle vornehmen kann und dabei in der mindestens einen Kulisse zum Erzeugen eines Vortriebs in einer Richtung der Längsachse abwechselnd an den gegenüberliegenden Profilflächen abschieben kann.

Die vorliegende Erfindung beruht auf der Idee, dass der mindestens eine Schieber in die mindestens eine ein Zahnprofil aufweisende Kulisse eingreift. Der mindestens eine Schieber greift hierbei bevorzugt derart in die Kulisse ein, dass der Schieber in der Längsachse stets in der Kulisse formschlüssig festgelegt ist und bei einer Bewegung in einer Richtung entlang der Längsachse abwechselnd sich an den gegenüberliegenden Profilflächen des Zahnprofils abschiebt bzw. abdrückt. Der Schieber kann somit eine spielfreie Linearbewegung in beide in der Längsachse orientierte Richtungen gewährleisten.

Ferner kann der vorgeschlagene Linearantrieb gegenüber den aus dem Stand der Technik bekannten Linearantrieben mit einer Spindel auf einfache Weise in der Längsachse verlängert werden, ohne dass das Bruchverhalten verändert wird. Beispielsweise kann die Schiene entweder gegen eine längere Schiene getauscht werden oder es können mehrere Schienen, auch mit unterschiedlichen Längen, in der Längsachse aneinandergereiht werden.

Eine Weiterbildung der vorliegenden Erfindung sieht vor, dass der Linearantrieb mindestens zwei Schieber aufweist, die in die mindestens eine Kulisse eingreifen und dass der Eingriff der mindestens zwei Schieber in die mindestens eine Kulisse mit einem Phasenversatz erfolgt.

Der Phasenversatz zwischen den mindestens zwei Schiebern kann auf unterschiedliche Weise realisiert werden. Beispielsweise können, wie später noch im Detail beschrieben werden wird, die mindestens zwei Schieber in unterschiedliche Kulissen eingreifen, wobei die Zahnprofile der mindestens zwei Kulissen in der Längsachse versetzt angeordnet sind, oder indem die Auslenkung der mindestens zwei Schieber quer zu der Längsachse durch die Antriebswelle bei unterschiedlichen Drehwinkeln erfolgt. Durch das in der Phase versetzte Eingreifen der mindestens zwei Schieber kann eine besonders gleichmäßige Bewegung entlang der Längsachse erzeugt werden. Gleichzeitig kann durch eine entsprechende Anzahl von in die Kulisse eingreifenden Schiebern die Bruchlast des Linearantriebs auf einfache Weise dimensioniert werden.

Darüber hinaus hat es sich als vorteilhaft erwiesen, wenn das Zahnprofil der Kulisse einen zickzack- oder wellenförmigen Verlauf aufweist. Die zwei gegenüberliegenden Profilflächen können eine beliebige Anzahl von Zähnen aufweisen, die jeweils aus einer ansteigenden und abfallenden Zahnflanke gebildet sind, wobei der Punkt oder Abschnitt zwischen zwei benachbarten Zahnflanken hier als Übergang bezeichnet wird. Bevorzugt sind die Übergänge von zwei gegenüberliegenden Profilflächen einer Kulisse näherungsweise quer zu der Längsachse in einer Flucht angeordnet.

Gemäß einer Weiterbildung der vorliegenden Erfindung ist der Abstand zwischen den gegenüberliegenden Profilflächen konstant bzw. gleichbleibend. Der Abstand zwischen den gegenüberliegenden Profilflächen wird vorzugsweise quer zu der Längsachse gemessen.

Nach Maßgabe einer Weiterbildung der vorliegenden Erfindung wird die mindestens eine Kulisse als Nut oder Durchbrechung in der mindestens einen Schiene ausgebildet. Die Nut oder Durchbrechung ist bevorzugt auf einer Hauptfläche, auch Kulissenfläche genannt, der Schiene ausgebildet, und weist vorzugsweise eine konstante Nuttiefe auf.

Erfindungsgemäß ist es, wenn der jeweilige Schieber mindestens einen Pin, vorzugsweise mindestens zwei Pins, umfasst, wobei der mindestens eine Pin in die Kulisse greift. Der mindestens eine Pin steht von einem Grundkörper des Schiebers ab und ragt in einer Achse quer zu der Längsachse und quer zu der Achse, entlang derer der mindestens eine Schieber die zyklische und lineare Bewegung vornimmt. Sind gemäß einer bevorzugten Ausgestaltung zwei oder mehrere Pins jeweils an dem mindestens einen Schieber vorgesehen, entspricht der Abstand zwischen den Pins des jeweiligen Schiebers dem Abstand zwischen den benachbarten Zähnen des Zahnprofils.

Weiterhin hat es sich als vorteilhaft erwiesen, wenn der mindestens eine Pin mindestens eine Reibfläche aufweist, die an den gegenüberliegenden Profilflächen zum Erzeugen eines Vortriebs in Wirkkontakt kommen kann. Die Reibfläche des Pins kann mit der jeweiligen Profilfläche in einen Flächenkontakt oder einen Linienkontakt kommen.

Auch kann es vorteilhaft sein, wenn der mindestens eine Pin eine Ummantelung aufweist, die verbesserte Reibeigenschaften aufweist und ein leichtgängiges Reiben an den gegenüberliegenden Profilflächen ermöglicht.

Gemäß einer bevorzugten Weiterbildung der vorliegenden Erfindung korrespondiert die mindestens eine Reibfläche mit der Form eines Zahngrundes zwischen zwei benachbarten Zähnen, wodurch die mindestens eine Reibfläche des mindestens einen Schiebers in Wirkkontakt mit zwei unmittelbar benachbarten Zahnflanken einer der gegenüberliegenden Profilflächen steht.

Darüber hinaus ist es erfindungsgemäß, wenn ein Abstand zwischen den gegenüberliegenden Profilflächen der Kulisse näherungsweise dem Abstand zwischen zwei diametralen Seiten des mindestens einen Pins entspricht. Für den Fall, dass zwei oder mehrere Schieber vorhergesehen sind, kann es vorteilhaft sein, wenn der Abstand zwischen zwei diametralen Seiten des jeweiligen mindestens einen Pins geringfügig kleiner ist als der Abstand zwischen den gegenüberliegenden Profilflächen, wodurch ungewünschte Reibung bzw. ein Verkannten des Pins in der Kulisse vermieden werden kann.

Ferner sieht eine Weiterbildung der vorliegenden Erfindung vor, dass der mindestens eine Pin im Querschnitt quader-, rauten- oder zylinderförmig ausgebildet ist. Insbesondere ist es bevorzugt, wenn der mindestens eine Pin quader- oder rautenförmig ausgebildet ist, wodurch ein flächiger Wirkkontakt zwischen der jeweiligen Profilfläche und dem mindestens einen Pin erreicht werden kann.

Darüber hinaus hat es sich gemäß einer bevorzugten Weiterbildung als vorteilhaft erwiesen, wenn der jeweilige Schieber und/oder die Kulisse symmetrisch ausgebildet sind bzw. ist.

Weiterhin hat es sich als vorteilhaft erwiesen, wenn die Antriebswelle außerhalb der Kulisse angeordnet ist. Bevorzugt liegt die Kulisse in der Schienenebene, wobei die Antriebswelle entweder entlang oder parallel eines Normalenvektors der Schienenebene angeordnet ist oder in einer Ebene parallel und beabstandet zu der Schienenebene entlang der Längsachse.

Ferner hat es sich als vorteilhaft erwiesen, wenn mindestens zwei Kulissen vorgesehen sind und wenn in jede der mindestens zwei Kulissen mindestens ein Schieber eingreift. Die mindestens zwei Kulissen können auf einer einzigen Schiene ausgebildet sein und sich dort parallel und beabstandet entlang der Längsachse orientiert erstrecken oder die mindestens zwei Kulissen können auf zwei Schienen ausgebildet sein, die parallel und beabstandet zueinander entlang der Längsachse angeordnet sind. Bevorzugt sind die mindestens zwei Kulissen symmetrisch zu der Antriebswelle angeordnet.

Eine bevorzugte Weiterbildung der vorliegenden Erfindung sieht vor, dass die mindestens zwei Kulissen jeweils in einer Schienenebene angeordnet sind, wobei die mindestens zwei Schienenebenen parallel und beabstandet angeordnet sind.

Auch hat es sich als vorteilhaft erwiesen, wenn die jeweilige Schiene auf zwei gegenüberliegenden Hauptflächen jeweils eine Kulisse aufweist oder wenn mindestens zwei Schienen vorgesehen sind, und jede der mindestens zwei Schienen mindestens eine Kulisse aufweist.

Die mindestens eine Kulisse kann auf einer einer Drehachse der Antriebswelle zugewandten oder von ihr abgewandten Seite angeordnet sein, wobei durchaus Kombinationen mit mindestens zwei Kulissen denkbar sind, bei denen eine der Kulissen auf der der Antriebswelle zugewandten Seite angeordnet ist und die andere Kulisse auf der von der Antriebswelle abgewandten Seite angeordnet ist.

Eine Weiterbildung der vorliegenden Erfindung sieht vor, dass die Antriebswelle wenigstens ein Führungsmittel umfasst, das die zyklische Bewegung der mindestens zwei Schieber während der Umdrehung der Antriebswelle vorgibt. Das Führungsmittel kann beispielsweise durch eine Kurbelwelle oder Nockenwelle gebildet sein und der jeweilige Schieber kann Kontaktflächen aufweisen, die mit dem Führungsmittel zusammenwirken. Im einfachsten Fall kann der Schieber eine Ausnehmung oder Durchbrechung aufweisen, in der das wenigstens eine Führungsmittel der Antriebswelle mit den Kontaktflächen des Schiebers in Wirkkontakt kommen kann.

Eine Weiterbildung der vorliegenden Erfindung sieht vor, dass das mindestens eine Führungsmittel ausgebildet ist, dass der jeweilige Schieber zwischen den Wendepunkten der zyklischen Bewegung eine näherungsweise lineare Bewegung vornehmen kann. Ein solches Führungsmittel kann beispielsweise aus einem näherungsweise herzförmigen Führungsmittel gebildet werden, welches beispielsweise aus der EP 3 980 668 bekannt ist.

Darüber hinaus hat es sich als vorteilhaft erwiesen, wenn ein Gehäuse vorgesehen ist, und wenn an dem Gehäuse die Antriebswelle und der mindestens eine Schieber quer zu der Längsachse beweglich gelagert gehalten sind. Das Gehäuse kann beispielsweise gegenüber der Schiene abgestützt sein und kann beispielsweise mit dem Sitz in einem Fahrzeug gekoppelt sein.

Eine weitere vorteilhafte Ausgestaltung der vorliegenden Erfindung sieht vor, dass ein Antrieb vorgesehen ist, wobei der Antrieb die mindestens eine Antriebswelle antreibt. Insbesondere ist es bevorzugt, wenn der Antrieb ein elektrischer Antrieb ist, und wenn zwischen dem Antrieb und der Antriebswelle ein Getriebe, vorzugsweise ein Untersetzungsgetriebe, vorgesehen ist.

Gemäß einer bevorzugten Weiterbildung der vorliegenden Erfindung ist der Antrieb zwischen mindestens zwei Schiebern angeordnet. Beispielsweise ist es vorteilhaft, wenn der Antrieb in der Längsachse zwischen mindestens zwei Schiebern angeordnet ist oder wenn der Antrieb quer zu der Längsachse zwischen mindestens zwei Schiebern angeordnet ist.

Darüber hinaus bezieht sich die vorliegende Erfindung auf eine Längsverstelleinheit mit einem erfindungsgemäßen Linearantrieb.

Ein weiterer Aspekt der vorliegenden Erfindung betrifft ein Kraftfahrzeug mit wenigstens einem solchen erfindungsgemäßen Linearantrieb.

Nachfolgend wird unter Bezugnahme auf die begleitenden Zeichnungen ein erfindungsgemäßes Ausführungsbeispiel sowie Weiterbildungen der vorliegenden Erfindung im Detail beschrieben. Es zeigen:
- Figur 1: eine perspektivische Darstellung eines ersten Ausführungsbeispiels eines Linearantriebs mit einer Schiene, die entlang einer Längsachse orientiert ist, einen Schieber, der in die Kulisse greift und eine Antriebswelle mit einem Antrieb, durch den der Schieber quer zur Längsachse beweglich ist,
- Figur 2: der Draufsicht auf den Linearantrieb gemäß Figur 1,
- Figur 3: eine Schnittdarstellung gemäß der Schnittlinie A-A in Figur 2,
- Figur 4: eine Seitenansicht der Schieber des Linearantriebs gemäß Figur 1,
- Figur 5: eine perspektivische Darstellung eines zweiten Ausführungsbeispiels des Linearantriebs,
- Figur 6: eine Draufsicht auf den Linearantrieb gemäß Figur 5,
- Figur 7: zwei stark vereinfachte Ansichten eines Schiebers gemäß Figur 5,
- Figur 8: eine perspektivische Darstellung eines dritten Ausführungsbeispiels des Linearantriebs,
- Figur 9: eine vereinfachte perspektivische Darstellung der Schieber und der Antriebseinrichtung gemäß Figur 8,
- Figur 10: eine Schnittdarstellung des Linearantriebs gemäß Figur 8,
- Figur 11: eine perspektivische Darstellung eines vierten Ausführungsbeispiels des Linearantriebs,
- Figur 12: eine Seitenansicht des Linearantriebs gemäß Figur 11,
- Figur 13: eine Schnitterstellung gemäß der Schnittlinie B - B in Figur 12,
- Figur 14: eine Schnittdarstellung gemäß der Schnittlinie A - A gemäß Figur 12,
- Figur 15: zwei Darstellungen der Schieber und der Antriebseinrichtung gemäß Figur 11,
- Figur 16: eine perspektivische Darstellung eines vierten Ausführungsbeispiels des Linearantriebs,
- Figur 17: eine vereinfachte perspektivische Darstellung der Schieber des Linearantriebs mit der Antriebswelle gemäß Figur 16,
- Figur 18: eine Schnittdarstellung des Linearantriebs gemäß Figur 16,
- Figur 19: eine perspektivische Darstellung eines fünften Ausführungsbeispiels des Linearantriebs,
- Figur 20: eine Schnittdarstellung des Linearantriebs gemäß Figur 19,
- Figur 21: eine vereinfachte perspektivische Darstellung der Schieber des Linearantriebs mit der Antriebswelle gemäß Figur 19,
- Figur 22: eine perspektivische Darstellung eines sechsten Ausführungsbeispiels des Linearantriebs,
- Figur 23: eine vereinfachte Schnittdarstellung des Linearantriebs quer zur Längsachse gemäß Figur 22,
- Figur 24: eine vereinfachte Schnittdarstellung parallel zur Längsachse des Linearantriebs gemäß Figur 22,
- Figur 25: eine perspektivische Darstellung eines siebten Ausführungsbeispiels des Linearantriebs,
- Figur 26: eine vereinfachte perspektivische Darstellung des Linearantriebs gemäß Figur 25,
- Figur 27: eine vereinfachte Schnittdarstellung quer zur Längsachse des Linearantriebs gemäß Figur 25,
- Figur 28: eine vereinfachte Schnittdarstellung des Linearantriebs gemäß Figur 25 mit einem Schieber, der in die Kulisse der Schiene eingreift,
- Figur 29: eine vereinfachte Schnittdarstellung des Linearantriebs analog zur Figur 28, wobei die Antriebswelle eine viertel Drehung gegen den Urzeigersinn um ihre Drehachse erfahren hat,
- Figur 30a: eine Kurbel- oder Nockenwelle der Antriebswelle gemäß den Ausführungsbeispielen gemäß der Figuren 1-29,
- Figur 30b: eine Detaildarstellung einer Schiene gemäß den Figuren 1-29,
- Figur 31a: eine Weiterbildung der Kurbel- oder Nockenwelle der Antriebswelle, und
- Figur 31b: eine Detaildarstellung der Schiene für eine Kurbel- oder Nockenwelle gemäß Figur 31a.

Gleiche oder funktional gleiche Teile oder Merkmale werden in der nachfolgenden detaillierten Beschreibung der Figuren mit den gleichen Bezugszeichen gekennzeichnet. Darüber hinaus sind in den Figuren nicht alle gleichen oder funktional gleichen Teile oder Merkmale mit einer Bezugsziffer versehen.

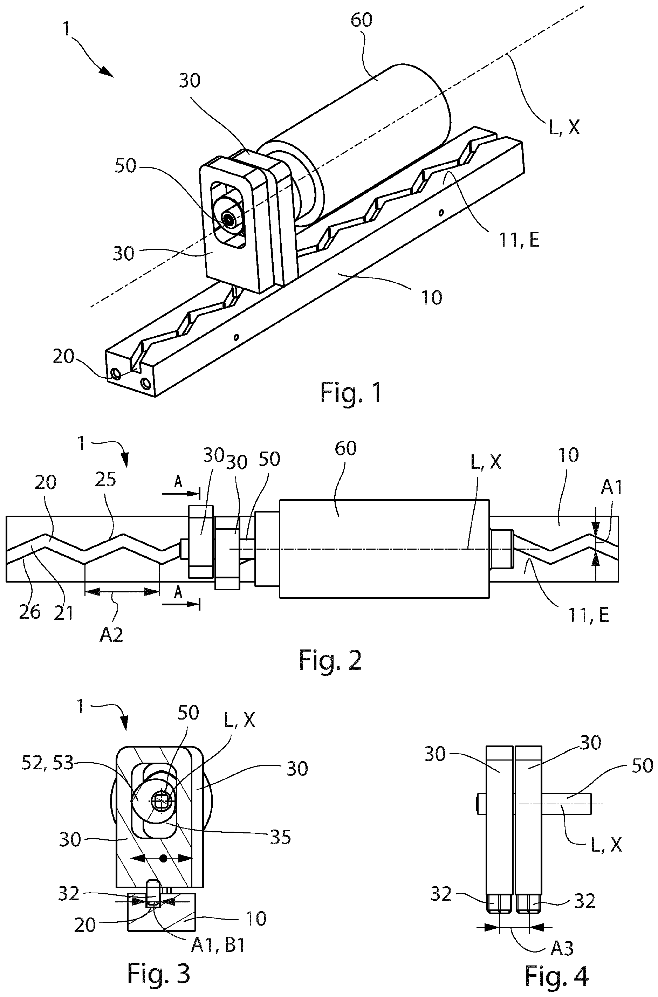

Figur 1 zeigt eine beispielhafte vereinfachte und perspektivisch dargestellte Ausgestaltung eines Linearantriebs 1 der beispielsweise in einer Längsverstelleinheit 2 für einen (nicht dargestellten) Sitz eines (nicht dargestellten) Kraftfahrzeuges zur Anwendung kommen kann.

Der Linearantrieb 1 gemäß Figur 1 umfasst eine Schiene 10, die entlang einer Längsachse L orientiert ist, mindestens einen Schieber 30, der quer zur Längsachse L beweglich ist und mindestens eine antreibbare Antriebswelle 50. Die Antriebswelle 50 ist in einer Drehachse X drehbar.

Die mindestens eine Schiene 10 ist entlang der Längsachse L orientiert, wobei beispielsweise die Längsachse L durch eine Fahrzeuglängsachse des Kraftfahrzeugs vorgegeben sein kann. Die Schiene 10 weist mindestens eine ein Zahnprofil 21 bildende Kulisse 20 auf, die zwei gegenüberliegende Profilflächen 25, 26 umfasst.

Die mindestens eine Schiene 10 ist vorzugsweise im Querschnitt quaderförmig. Die Nut oder Durchbrechung ist bevorzugt auf einer Hauptfläche, welche nachfolgend Kulissenfläche 11 genannt wird, der Schiene 10 ausgebildet.

Die Kulissenfläche 11 spannt vorzugsweise eine Schienenebene E ein, welche parallel zu der Längsachse L orientiert ist.

Die als Nut oder Durchbrechung ausgebildete Kulisse 20 erstreckt sich in Richtung des Normalenvektors in die Schiene 10, wonach die gegenüberliegenden Profilflächen 25, 26 parallel zum Normalenvektor angeordnet sind.

Die Kulisse 20 weist bevorzugt eine konstante Kulissentiefe auf.

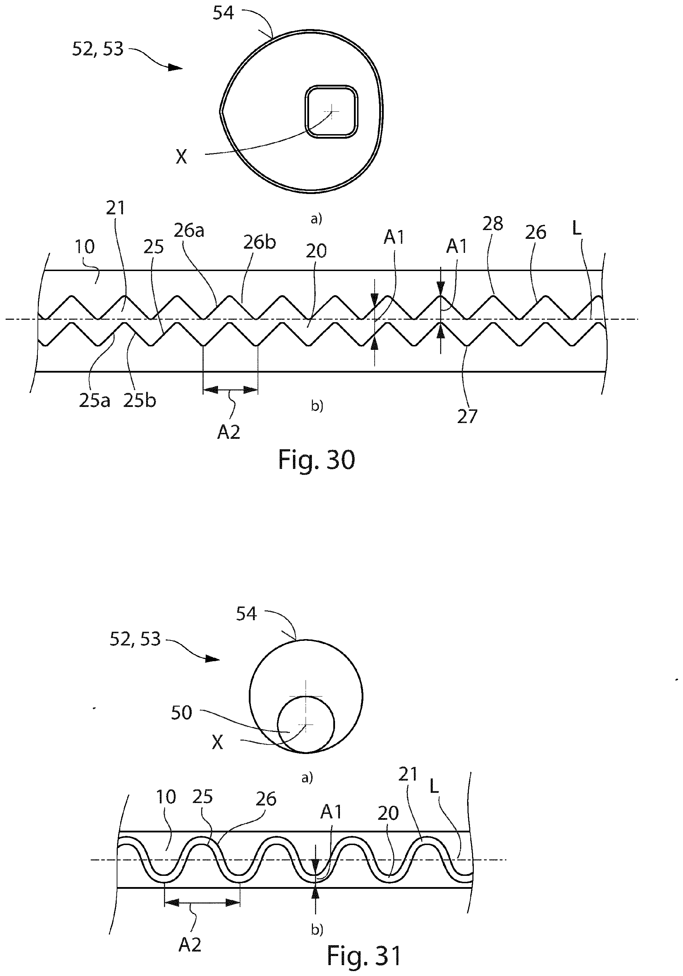

Die Kulisse 20 gemäß der Detaildarstellung in Figur 30b umfasst die zwei gegenüberliegenden Profilflächen 25, 26, die sich in einem bleibenden Abstand A1, siehe Figur 2, zur Ausbildung des Zahnprofils 21 mit einer Mehrzahl von Zähnen 22 zickzack- oder wellenförmig erstecken. Eine zickzackförmige Kulisse 20 wird detailliert in Figur 30b gezeigt und eine wellenförmige Kulisse 20 ist detailliert in Figur 30b dargestellt. Der Abstand A1 kann auch als Nutbreite der Kulisse 20 bezeichnet werden.

Die zwei gegenüberliegenden Profilflächen 25, 26 der Kulisse 20 sind folglich im Wesentlichen senkrecht zu der Schienenebene E orientiert. Die Zähne 22 weisen symmetrische Flanken 25a, 25b, 26a, 26b auf, die sich beidseitig zwischen Zahnspitze und Zahngrund erstrecken. Zwei benachbarte Zahnspitzen sind in einem Zahnabstand A2 angeordnet, bzw. die Länge eines Zahns 22 in der Längsachse entspricht dem Zahnabstand A2.

Das Zahnprofil 21 kann, wie unter anderem den Figuren 1 und 2 entnommen werden kann, sich entlang der Längsachse L vollständig über die Schiene 10 erstrecken.

Die Ausführungsbeispiele gemäß den begleitenden Figuren zeigen mindestens zwei Schieber 30, wobei an dieser Stelle angemerkt wird, dass bereits ein einziger Schieber 30 ausreicht, um einen Vortrieb in eine Richtung L1 oder L2 der Längsachse L zu erzeugen.

Die zwei Schieber 30 eines Linearantriebs 1 können, wie in den Ausführungsbeispielen Figuren 1-21 dargestellt ist, im Wesentlichen baugleich sein.

Der jeweilige Schieber 30 ist mit der antreibbaren Antriebswelle 50 derart trieblich gekoppelt, dass der jeweilige Schieber 30 mindestens eine zyklische Bewegung im Verlauf einer Umdrehung der Antriebswelle 50 vornimmt.

Der Schieber 30 kann eine Durchbrechung 35 oder Ausnehmung aufweisen. Die Durchbrechung 35 oder die Ausnehmung erstreckt sich bevorzugt in der Drehachse X und kann eine Breite B2 und eine Höhe H2 aufweisen.

Zum Erzeugen des Vortriebs in einer Richtung der Längsachse L greift der Schieber 30 in die Kulisse 20 der Schiene 10. Hierzu kann der Schieber 30 eine Reibfläche 33 umfassen, die eingerichtet ist, in Wirkkontakt mit den gegenüberliegenden Profilflächen 25, 26 zu stehen. Wie in Figur 3 erkennbar ist, kann die Reibfläche 33 auf einem Pin 32 ausgebildet sein, der von einem Grundkörper 31 des Schiebers 30 quer zu der Längsachse L und senkrecht zu der Schienenebene E in die Kulisse 20 greift.

Der Pin 32 kann eine quaderförmigen, rautenförmigen oder runden Querschnitt aufweisen und kann integral mit dem Grundkörper 31 ausgebildet sein oder an dem Grundkörper 31 des Schiebers 30 befestigt, insbesondere eingesetzt, sein.

Wie Fig. 3 entnommen werden kann, weist der Pin 32 eine Breite B1 auf, die quer zu der Längsachse L gemessen wird. Bevorzugt entspricht die Breite B1 näherungsweise dem Abstand A1 der zwei Profilflächen 25, 26, also B1 ≈ A1.

Die Reibfläche 33 kann eine Oberfläche mit verbesserten Reibeigenschaften aufweisen, um die Reibung zwischen der Kulisse 20 und dem Schieber 30 zu reduzieren. Bevorzugt ist es, wenn die Reibfläche 33 hierzu eine Ummantelung umfasst, die ein leichtgängiges Reiben an den gegenüberliegenden Profilflächen 25, 26 begünstigt.

Der Schieber 30, insbesondere der Pin 32 des Schiebers 30, ist in der Längsachse L zwischen zwei gegenüberliegenden Profilflächen 25, 26 bevorzugt formschlüssig gehalten. Der Formschluss in der Längsachse L zwischen dem Schieber 30 und der Kulisse 20 kann eine ungewünschte Bewegung oder einen Freilauf des Linearantriebs 1 blockieren.

Die Kopplung zwischen der Antriebswelle 50 und dem jeweiligen Schieber 30 kann auf unterschiedliche Weise erfolgen, wobei gemäß den hier vorgestellten Ausführungsbeispielen die Kopplung durch Führungsmittel 52 erfolgen kann, die mit dem Schieber 30 zusammenwirken. Der Schieber 30 kann mindestens eine Kontaktfläche 42 aufweisen, die mit dem Führungsmittel 52 zusammenwirkt.

Das Führungsmittel 52 kann beispielsweise, wie in den begleitenden Figuren 1-29 dargestellt ist, als eine Nockenwellenscheibe 53 einer Kurbelwelle oder Nockenwelle ausgebildet sein, und in die Durchbrechung 35 oder Ausnehmung des Schiebers 30 greifen und dort mit Schieberführung 42 zusammenwirken.

Die Antriebswelle 50 ist durch den Antrieb 60 antreibbar, wobei der Antrieb 60 bevorzugt ein elektrischer Antrieb ist, der noch weiter bevorzugt über ein (nicht dargestelltes) Getriebe mit der Antriebswelle 50 gekoppelt ist.

Das Führungsmittel 52 bzw. die Nockenwellenscheibe 53 gemäß dem Ausführungsbeispiel gemäß Figur 1 sowie gemäß den nachfolgenden Ausführungsbeispielen ist detailliert in Figur 30a dargestellt und kann als im Wesentlichen herzförmig ausgebildet beschrieben werden.

Das Führungsmittel 52 bzw. die Nockenwellenscheibe 53 weist gemäß der Detaildarstellung in Figur 30a eine Kontaktfläche 54 auf, die in der Umlaufrichtung in einem Abstand zu einer Drehachse X der Antriebswelle 50 ausgebildet ist. Der Abstand zwischen der Kontaktfläche 54 und der Drehachse X ändert sich in der Umlaufrichtung und zwar derart, dass der Abstand in mindestens einer ersten Hälfte vorwiegend linear in einer Umlaufrichtung zunimmt und in mindestens einer zweiten Hälfte in der Umlaufrichtung linear abnimmt. Die Kontaktfläche 54 verläuft in der jeweiligen Hälfte näherungsweise spiralförmig, wobei die Kontaktfläche 54 bevorzugt derart ausgebildet ist, dass der Abstand zwischen zwei diametralen Seiten, gemessen über die Drehachse X, näherungsweise konstant ist.

Durch die triebliche Kopplung des mindestens einen Schiebers 30 mit der Antriebswelle 50 wird der jeweilige Schieber 30 mindestens in eine lineare und quer zu der Längsachse zyklische Bewegung im Verlauf einer Umdrehung der Antriebswelle 50 versetzt, wobei die zyklische Bewegung des jeweiligen Schiebers 30 in der Schienenebene E oder parallel zu der Schienenebene E erfolgt. Der Doppelpfeil in Figur 3 soll die zyklische Bewegung in der Schienenebene E oder parallel zu der Schienenebene E des Schiebers 30 verdeutlichen.

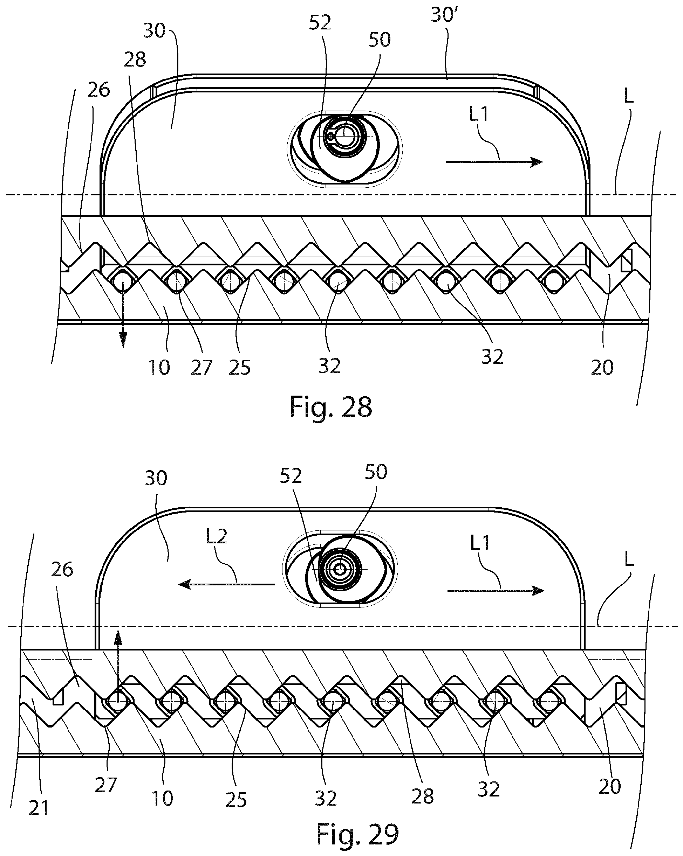

Bei der zyklischen Bewegung des mindestens einen Schiebers 30 schiebt sich der Schieber 30 zum Erzeugen des Vortriebs in der Längsachse L abwechselnd an den gegenüberliegenden Profilflächen 25, 26 ab. Anders ausgedrückt, bewegt sich der Schieber 30 bei mindestens einer Umdrehung der Antriebsachse 50 um die Drehachse X quer zu der Längsachse L. Dieses Zusammenwirken wird beispielsweise in den Figuren 28 und 29 dargestellt, wobei in Figur 29 die Antriebswelle 50 gegenüber der Darstellung in Figur 28 eine Viertelumdrehung um die Drehachse X entgegen dem Uhrzeigersinn vollzogen hat.

Ein vollständiger Zyklus der Bewegung umfasst ausgehend von einer Ausgangslage eine Bewegung in einer ersten Richtung Y1 und einen Wechsel der Bewegung in eine zweite Richtung Y2 an einem Wendepunkt. Die Bewegung in der zweiten Richtung Y2 wird bis zum nächsten Wendepunkt fortgesetzt. Anschließend erfolgt eine eine Rückkehr in die Ausgangslage.

Unter weiterer Bezugnahme auf die Figuren 28 und 29 wird gezeigt, wie sich der Schieber 30 zum Erzeugen eines Vortriebs in eine erste Richtung L1 entlang der Längsachse L in der ersten Richtung Y1 an der Flanke 25a der Profilfläche 25 abschiebt und in der zweiten Richtung Y2 an der Flanke 26a der Profilfläche 26. In dem jeweiligen Wendepunkt greift der Schieber 30 vorzugsweise in einen als Zahngrund 27, 28 ausgebildeten Übergang der jeweiligen Profilfläche ein, wobei im Zahngrund 27, 28 der Schieber 30 in der Längsachse L an einer der zwei gegenüberliegenden Profilflächen 25, 26, also 25a und 25b oder 26a und 26b, in der Längsachse formschlüssig gehalten ist.

Zum Erzeugen eines Vortriebs in eine der ersten Richtung L1 entgegengesetzte zweite Richtung L2 schiebt sich der Schieber 30 in der ersten Richtung Y1 an der Flanke 25b der Profilfläche 25 ab und in der zweiten Richtung Y2 an der Flanke 26b der Profilfläche 26.

In den begleitenden Ausführungsbeispielen weist der Linearantrieb 1 jeweils zwei Schieber 30 auf. Aus den Figuren 1 bis 3 ist unmittelbar ersichtlich, dass die zwei Schieber 30 in der Längsachse L beabstandet zueinander angeordnet sind. Die Schieber 30 greifen in einem Schieberabstand A3 in die Kulisse 20 ein, wobei der Schieberabstand A3 parallel zu der Längsachse L gemessen wird.

Die zwei Schieber 30 greifen phasenversetzt in die Kulisse 20 ein, wobei bevorzugt der Phasenversatz φ derart gewählt ist, dass sich die zwei Schieber 30 nicht zeitgleich an einem Wendepunkt befinden, bzw. dass die zwei Schieber 30 nicht zweitgleich in die Zahngründe 27, 28 greifen.

Der Phasenversatz φ der Bewegung der Schieber 30 kann durch die Führungsmittel 52 vorgegeben werden, wofür beispielsweise die Nockenwellenscheiben 53 auf der Antriebswelle 50 in unterschiedlichen Winkeln um die Drehachse X herum angeordnet sind. In den nachfolgenden Figuren beträgt der Winkel ca. 90°, wodurch ein Phasenversatz φ von einem Viertel der Zykluslänge erreicht wird, also φ = 1/4. Für den Schieberabstand A3 ergibt sich folgender Zusammenhang: A3 = n x A2 + φ x A2, wobei n eine natürliche ganze Zahl, also 0,1,2,3,... und A2 die Länge eines Zahns 22 bzw. den Zahnabstand ist. In dem dargestellten Ausführungsbeispiel beträgt der Schieberabstand A3 = ¼ A2.

Bevorzugt gilt für den Phasenversatz φ zwischen den mindestens zwei Schiebern 0 < φ < 0,5 und 0,5 < φ < 1, wobei für den Fall, dass mehr als zwei Schieber vorgesehen sein können, der Phasenversatz zwischen zwei der drei Schieber auch φ = 0, φ=0,5 oder φ = 1 sowie ein Mehrfaches dessen betragen kann.

In dem ersten Ausführungsbeispiel gemäß den Figuren 1 bis 4 sind die zwei Schieber 30 einseitig auf der Antriebswelle zu dem Antrieb 60 angeordnet. In dem dort dargestellten Ausführungsbeispiel weist jeder Schieber 30 einen einzigen Pin 32 auf.

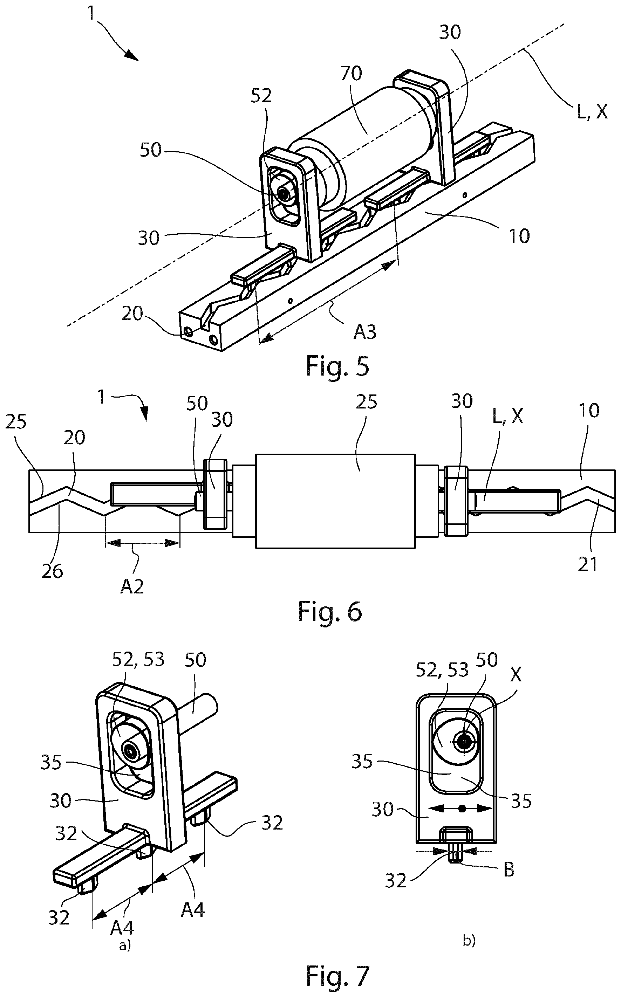

Das zweite Ausführungsbeispiel gemäß den Figuren 5-7 unterscheidet sich von dem ersten Ausführungsbeispiel gemäß den Figuren 1-3 in der Ausgestaltung und der Anordnung der Schieber 30.

Wie Figur 5 entnommen werden kann, weist der Linearantrieb 1 zwei Schieber 30 auf, die in der Drehachse X der Antriebswelle beidseitig zu dem Antrieb 60 angeordnet sind. Die zwei Schieber 30 können baugleich ausgebildet sein.

Die zwei Schieber 30 bzw. die Pins 32 der zwei Schieber 30 sind in einem Pinabstand A3 angeordnet, wobei sich auch hier für den Pinabstand A3 folgender Zusammenhang ergibt: A3 = n x A2 + φ x A2

Die Schieber 30 können auf einer gemeinsamen Antriebswelle 50 angeordnet sein, oder auf zwei unterschiedlichen Antriebswellen 50, wobei die Drehung der Antriebswelle 50 bevorzugt synchronisiert ist.

Die Drehachsen X der Antriebswelle 50 oder Antriebswellen 50 sind parallel zu der Längsachse L des Linearantriebs 1.

Ferner kann insbesondere den Figuren 5 und 7 entnommen werden, dass der jeweilige Schieber 30 drei Pins 32 umfasst, die in Ausrichtung der Längsachse L in einem gleich bleibenden NPinabstand A4 angeordnet sind. Die drei Pins 32 sind über einem kragarmförmigen Pinträger 34 an dem Grundkörper 31 angeordnet. Der Pinabstand A4 entspricht dem Abstand A2, also dem Abstand zwischen zwei benachbarten Zahnspitzen oder der Länge eines Zahns 22 in der Längsachse L.

Die Anzahl der Pins 32 an dem jeweiligen Schieber 30 kann beliebig gewählt werden. Durch eine geeignete Auswahl der Anzahl der Pins 32 kann eine Bruchlast des Linearantriebs 1 dimensioniert werden. Auch der Pinabstand A4 kann variiert werden, wobei dieser vorzugsweise ein Einfaches oder Vielfaches von dem Zahnabstand A2 beträgt.

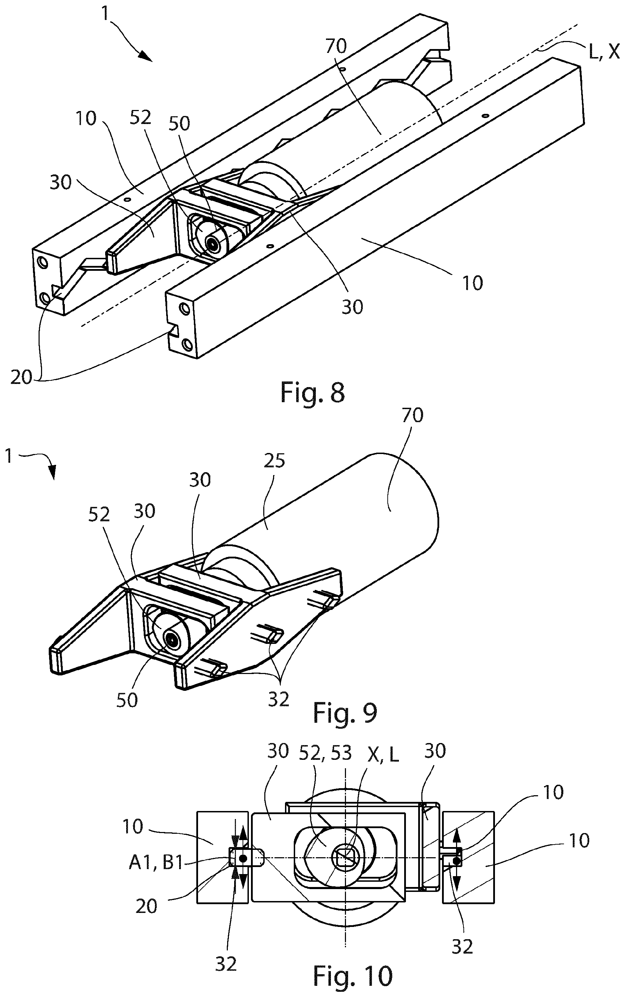

Das dritte Ausführungsbeispiel, welches in den Figuren 8-10 dargestellt ist, kann als eine Kombination der zuvor beschriebenen Ausführungsbeispiele erachtet werden, jedoch mit dem Unterschied, dass zwei Schienen 10 entlang der Längsachse L parallel und zueinander beabstandet angeordnet sind und jeder der zwei Schieber 30 in eine der Schienen 10 greift. Zwischen den beiden Schienen 10 sind die Schieber 30, die Antriebswelle 50 mit den Führungsmitteln 52 und der Antrieb 60 angeordnet, wobei die Kulissenflächen 11 der beiden Schienen 10 zueinander gewandt angeordnet sind.

Der jeweilige Schieber 30 ist analog zu dem Schieber 30 gemäß Figur 6 ausgebildet und weist jeweils drei Pins 32 auf, die entlang der Längsachse L in dem Pinabstand A4 angeordnet sind.

Der Pinträger 34 ist rautenförmig ausgebildet, wobei der mittlere Pin 32 mittig auf dem Pinträger 34 und mittig zu dem Grundkörper 31 angeordnet ist.

Die zwei Schieber 30 greifen - wie im Zusammenhang mit einem vorhergehenden Ausführungsbeispiel bereits ausführlich beschrieben - phasenversetzt in die jeweilige Kulisse der Schiene 10 ein, wobei der Phasenversatz in dem dargestellten Ausführungsbeispiel gemäß den Figuren 8-10 durch einen Winkelversatz zwischen den Führungsmitteln 52 bzw. den Nockenwellenscheiben 53 - wie insbesondere in Figur 9 dargestellt ist - realisiert wird. Demnach liegen die durch die Kulissen 20 gebildeten Zahnprofile 21 der beiden Schienen 10 in der gleichen Phase bzw. sind liniengespiegelt ausgebildet.

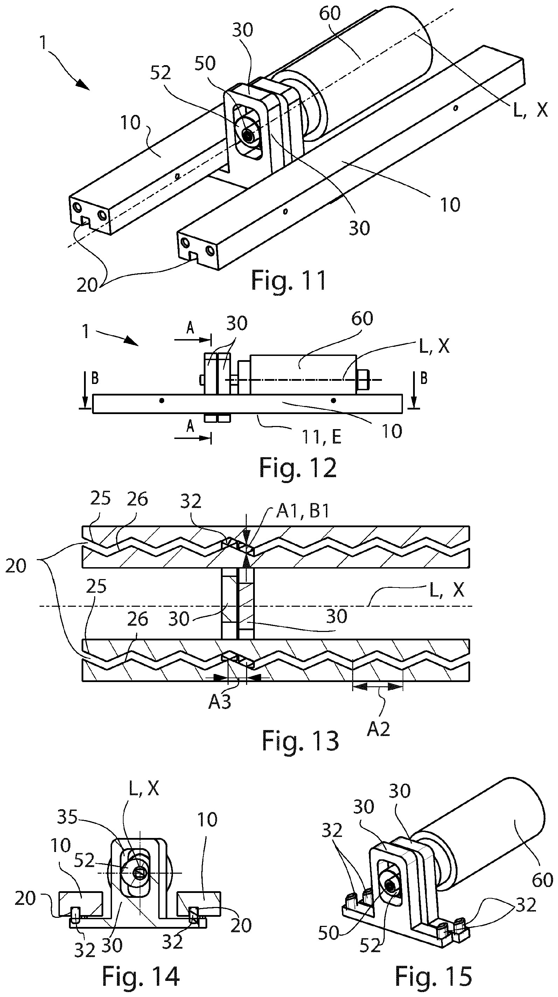

Ein viertes Ausführungsbeispiel kann den Figuren 11-15 entnommen werden. Das vierte Ausführungsbeispiel ähnelt dem ersten Ausführungsbeispiel gemäß den Figuren 1-4, jedoch mit dem Unterschied, dass entlang der Längsachse L zwei Schienen 10 parallel und beabstandet angeordnet sind, und dass jeder der Schieber 30 in die jeweilige Schiene 10 eingreift. Ferner sind die Kulissenflächen 11 mit den Kulissen 20 auf der von der Drehachse X abgewandten Seite der Schiene 10 angeordnet.

Der jeweilige Schieber 30 kann als T-förmig beschrieben werden und die Pins 32 sind quer zu der Längsachse auf gegenüberliegenden Seiten auf einem Pinträger 34 angeordnet, wobei die Pins 32 auf der der Drehachse X zugewandten Seite des Pinträgers 34 abstehen.

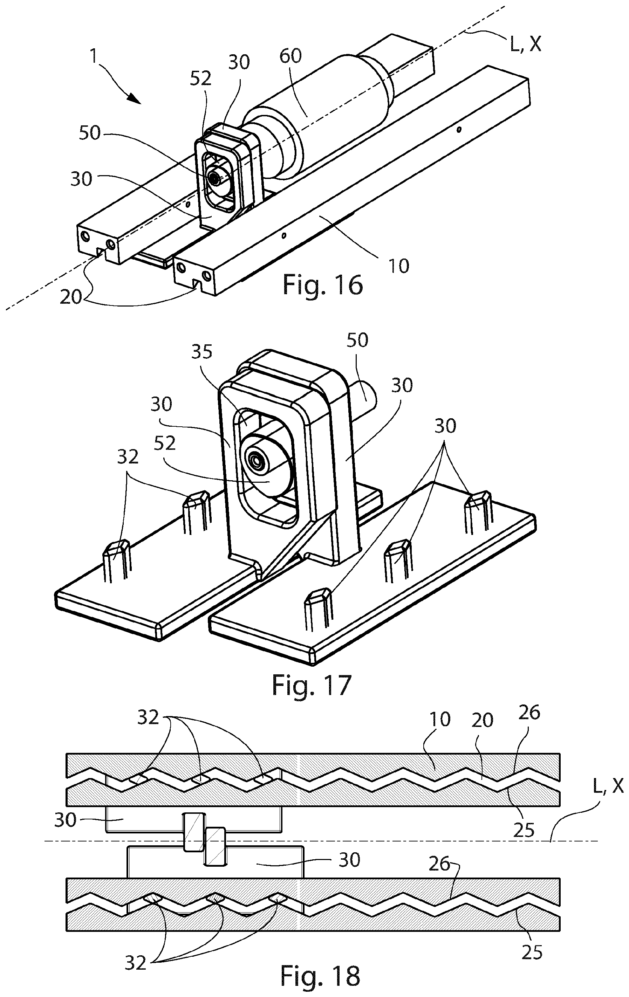

Ein fünftes Ausführungsbeispiel kann den Figuren 16-18 entnommen werden. Das fünfte Ausführungsbeispiel ähnelt dem vierten Ausführungsbeispiel gemäß den Figuren 11-15, jedoch mit dem Unterschied, dass der jeweilige Schieber 30 in eine der zwei Schienen 10 eingreift, und dass der jeweilige Schieber 30 entlang der Längsachse L drei Pins 32 aufweist, die in dem Pinabstand A4 angeordnet sind.

Der jeweilige Schieber 30 kann in der Form als L-förmig beschrieben werden und die drei Pins 32 sind in der Längsachse L auf dem Pinträger 34 angeordnet, wobei die Pins 32 auf der der Drehachse X zugewandten Seite des Pinträgers 34 abstehen.

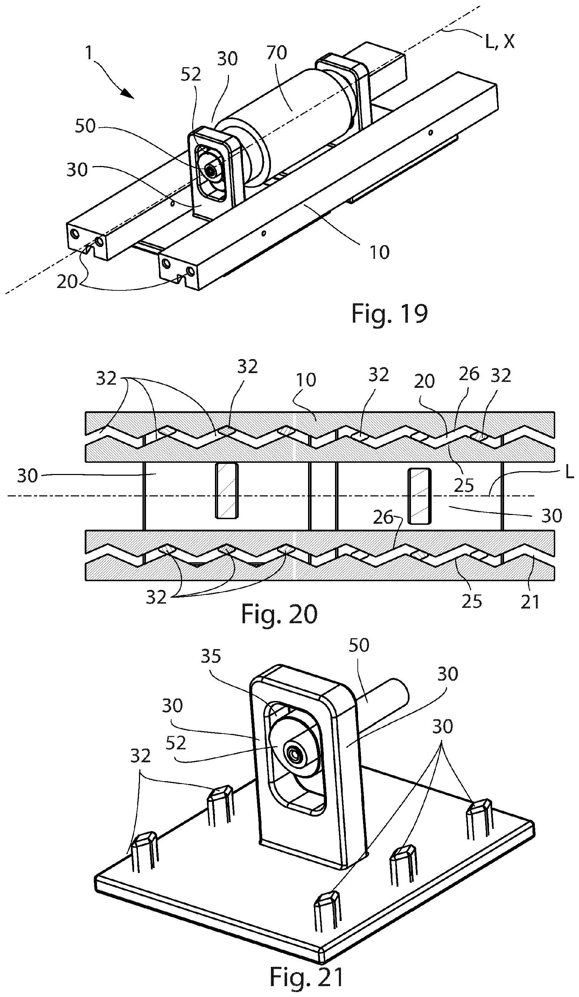

Ein sechstes Ausführungsbeispiel kann den Figuren 19-21 entnommen werden.

Das sechste Ausführungsbeispiel ähnelt dem vierten Ausführungsbeispiel gemäß den Figuren 11-15, jedoch mit dem Unterschied, dass die zwei Schieber 30 in der Längsachse L auf gegenüberliegenden Seiten des Antriebs 60 angeordnet sind und dass jeder Schieber 30 jeweils drei Pins 32 aufweist, die in die jeweilige Schiene 10 eingreifen. In der Summe weist somit jeder Schieber 30 sechs Pins 32 auf.

Der jeweilige Schieber 30 kann als T-förmig beschrieben werden und die sechs Pins 32 sind in der Längsachse L in zwei Reihen, jede Reihe ist für eine der Schienen 10, auf dem Pinträger 34 angeordnet, wobei die Pins 32 auf der der Drehachse X zugewandten Seite des Pinträgers 34 abstehen.

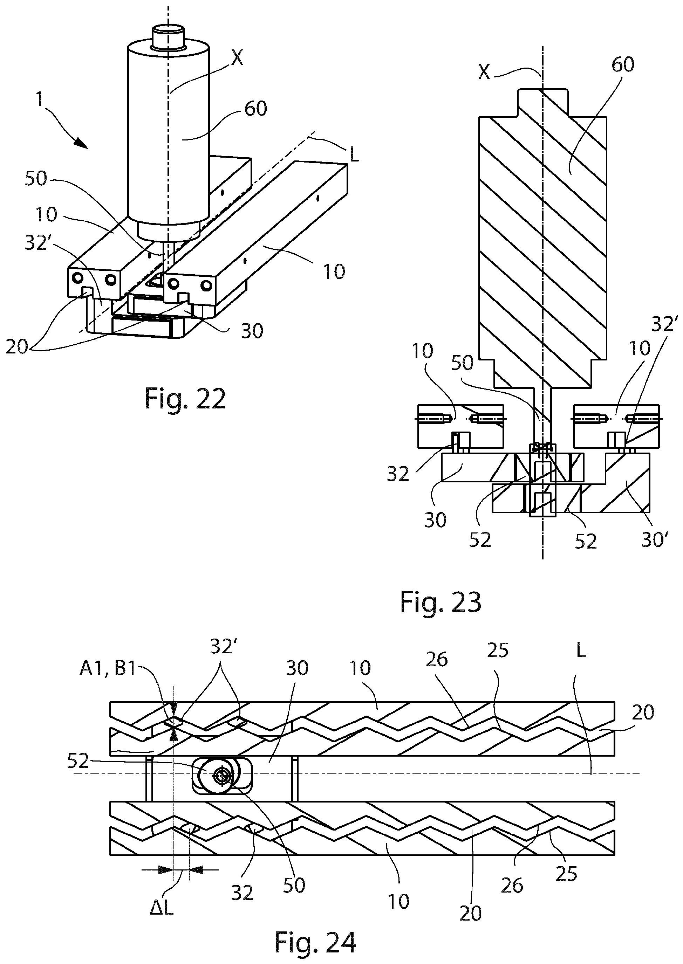

Ein siebtes Ausführungsbeispiel kann den Figuren 22-24 entnommen werden, wobei hier hervorgehoben werden kann, dass in diesem Ausführungsbeispiel die Drehachse X der Antriebswelle 50 quer zu der Längsachse L orientiert ist.

Entlang der Längsachse L sind - wie in den zuvor beschriebenen Ausführungsbeispielen - zwei Schienen 10 parallel und zueinander beabstandet angeordnet, wobei die jeweilige Kulisse 20 in der jeweiligen Schiene 10 auf der von dem Antrieb 60 abgewandten Seite angeordnet ist.

Die Schienenebenen E der beiden Schienen 10 liegen ineinander, jedoch können diese ebenfalls gemäß einer (nicht dargestellten) Weiterbildung parallel und beabstandet angeordnet sein. Ebenfalls ist es möglich, dass die Kulissen 20 auf der dem Antrieb 60 zugewandten Seite der Schienen 10 angeordnet sind.

Anderes als in den zuvor beschriebenen Ausführungsbeispielen sind die zwei Schieber 30 nicht baugleich ausgebildet. Um dies zu verdeutlichen, ist in den Figuren 22-24 einer der Schieber 30 zum besseren Verständnis mit dem Bezugszeichen 30' gekennzeichnet, um die unterschiedliche Ausgestaltung der Schieber 30 in den Figuren hervorzuheben. Der Schieber 30' kann im Gegensatz zu dem Schieber 30 einen Pinträger 34 aufweisen, der von dem Grundkörper 31 des Schiebers 30' in Richtung der Schiene 10 entlang der Drehachse X absteht.

Angemerkt wird an dieser Stelle, dass die Kulissen 10 ebenso auf der dem Antrieb 60 zugewandten Seite der Schienen 10 angeordnet sein können. Auch können die Schienenebenen E der Schienen 10 parallel und beabstandet sein, vorzugsweise derart, dass die Schieber 30 in einer gemeinsamen Ebene liegen können.

Unter Bezugnahme auf die begleitende Figur 24 ist ferner ersichtlich, dass der jeweilige Schieber 30, 30' zwei Pins 32, 32' aufweist. Betont wird, dass die Anzahl der Pins 32, 32' jedes einzelnen Schiebers 30, 30' beliebig gewählt werden kann. Die Pins 32, 32' des jeweiligen Schiebers 30, 30' sind entlang der Längsachse L in einem Pinabstand A4 angeordnet. Der Pinabstand A4, entspricht im Wesentlichen dem Zahnabstand A2, der den Abstand zwischen zwei benachbarten Zahnspitzen beschreibt.

Darüber hinaus kann der Figur 24 entnommen werden, dass die Pins 32 des Schiebers 30 und die Pins 32' des Schiebers 30' in der Längsachse L in einem Versatz ΔL zueinander versetzt angeordnet sind, wobei der Versatz ΔL mit dem Phasenversatz in der zyklischen Bewegung zwischen den beiden Schiebern 30 und 30' korreliert.

Der Phasenversatz φ der Bewegung der Schieber 30, 30' kann auch in diesem Ausführungsbeispiel wie bereits zuvor beschrieben durch die Führungsmittel 52 vorgegeben werden. Wie insbesondere der Figur 24 entnommen werden kann, sind die Nockenwellenscheiben 53 auf der Antriebswelle 50 in unterschiedlichen Winkel um die Drehachse X verdreht angeordnet. In diesem konkreten Ausführungsbeispiel beträgt der Winkel ca. 90°, wodurch ein Phasenversatz φ von einem Viertel der Zykluslänge erreicht wird, also φ = 1/4.

Für den Versatz ΔL ergibt sich folgender Zusammenhang: ΔL = φ x A2. In dem dargestellten Ausführungsbeispiel beträgt der Schieberabstand ΔL = ¼ A2. Bevorzugt gilt für den Phasenversatz φ zwischen den mindestens zwei Schiebern 30, 30': 0 < φ < 0,5 und 0,5 < φ < 1. Für den Fall, dass mehr als zwei Schieber 30, 30' vorgesehen werden, kann der Phasenversatz φ zwischen zwei der drei Schiebern 30, 30' auch φ = 0, φ=0,5 oder φ = 1 sowie ein Mehrfaches dessen betragen.

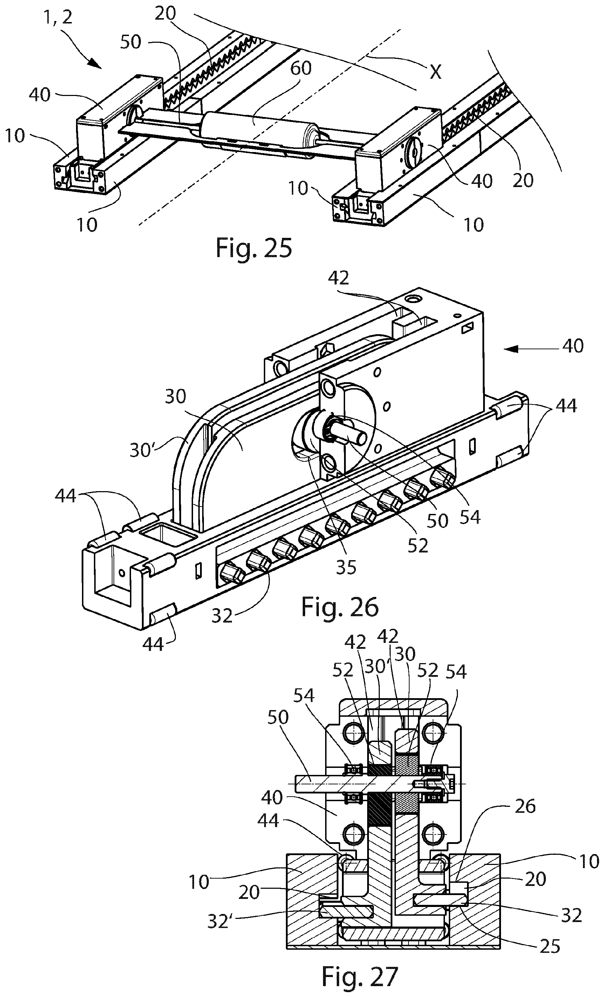

Das achte Ausführungsbeispiel eines Linearantriebs 1 ist in den Figuren 25-29 dargestellt, wobei in Figur 25 der Linearantrieb 1 in einer Längsverstelleinheit 2 beispielsweise des Kraftfahrzeugs zur Anwendung kommt.

Der Linearantrieb 1 gemäß diesem Ausführungsbeispiel ist in Anlehnung an das Ausführungsbeispiel 7 ausgebildet und zwar in dem Sinne, dass die Drehachse X der Antriebswelle 50 quer zu der Längsachse L orientiert angeordnet ist.

Der Linearantrieb 1 umfasst zwei Schienen 10, die parallel und zueinander beabstandet entlang der Längsachse angeordnet sind. Die jeweilige Schiene 10 umfasst - wie bereits zuvor detailliert beschrieben - jeweils eine Kulisse 10, die in der jeweiligen Kulissenfläche 11 der jeweiligen Schiene 10 in einer Schienenebene E angeordnet ist. Die beiden Kulissenflächen 11 der beiden Schienen 10 sind zueinander gewandt und in einem Freiraum zwischen den Schienen 10 sind zwei Schieber 30, 30' angeordnet, die jeweils mit einer der Kulissen 20 in Eingriff stehen.

Der Linearantrieb 1 kann, wie beispielhaft in den Figuren 25-27 gezeigt ist, ein als Ganzes bezeichnetes Gehäuse 40 aufweisen. Das Gehäuse 40 kann mehrteilig ausgebildet sein und kann die Schieber 30 ganz oder teilweise aufnehmen und kann ferner für den mindestens einen Schieber 30 eine Linearführung 42 bereitstellen. Die Linearführung 42 hält den mindestens einen Schieber 30 quer zur Längsachse L lineargeführt.

Weiterhin kann das Gehäuse 40 Stützmittel 44 aufweisen, die konfiguriert sind, das Gehäuse 40, wie insbesondere den Figuren 26 und 27 entnommen werden kann, gegenüber der mindestens einen Schiene 10 bzw. gegenüber den zwei Schienen 10 abzustützen.

Das Gehäuse 40 kann ferner Aufnahmen aufweisen, in dem Lager 56 für die Antriebswelle 50 abgestützt gehalten werden.

Die Schieber 30, 30' sind analog zu den Schiebern gemäß dem Ausführungsbeispiel 7 ausgebildet, wobei die Schieber 30, 30' in diesem Ausführungsbeispiel jeweils neun Pins 32 aufweisen, die in der Längsachse jeweils in einem Pinabstand A4 angeordnet sind. Die Pins 32, 32' des Schiebers 30 und des Schiebers 30' sind in der Längsachse in einem Versatz ΔL angeordnet und die zyklische Bewegung der beiden Schieber 30, 30' erfolgt mit einem Phasenversatz φ, wie bereits zuvor beschrieben wurde.

Die Längsverstelleinheit 2 gemäß Figur 25 kann zwei Linearantriebe 1 umfassen, wobei die Antriebswelle 50 des jeweiligen Linearantriebs 1 durch einen gemeinsamen Antrieb 60 angetrieben werden kann. Beispielsweise können beide Linearantriebe 1 eine gemeinsame Antriebswelle 50 aufweisen, wodurch eine Synchronisierung der Linearantriebe 1 gegeben ist.

Figur 31 zeigt eine Weiterbildung der Schiene 10 sowie von einem zugehörigen Führungsmittel 52 bzw. einer Nockenwellenscheibe 53. Die Kulisse 20 der Schiene 10 ist, wie bereits zuvor beschrieben, wellenförmig, wobei die Wellenform genauer gesagt als Sinus beschrieben werden kann. In eine derart ausgebildete Kulisse 20 greift bevorzugt eine im Querschnitt runde, insbesondere kreisförmige, Pin 32 ein.

### Bezugszeichenliste

- 1: Linearantrieb
- 2: Längsverstelleinheit
- 10: Schiene
- 11: Kulissenfläche

- 20: Kulisse
- 21: Zahnprofil
- 22: Zahn
- 25: Profilfläche
- 25a: Zahnflanke
- 25b: Zahnflanke
- 26: Profilfläche
- 26a: Zahnflanke
- 26b: Zahnflanke
- 27: Zahngrund
- 28: Zahngrund
- 30: Schieber
- 31: Grundkörper von 30
- 32: Pin
- 33: Reibfläche
- 34: Pinträger
- 35: Durchbrechung
- 40: Gehäuse
- 42: Schieberführung
- 44: Stützmittel
- 50: Antriebswelle
- 52: Führungsmittel
- 53: Nockenwellenscheibe
- 54: Kontaktfläche
- 60: Antrieb

- A1: Abstand
- A2: Zahnabstand
- A3: Schieberabstand
- A4: Pinabstand
- B1: Breite von 32
- B2: Breite von 35
- E: Schienenebene
- H1: Höhe
- L: Längsachse
- ΔL: Versatz
- X: Drehachse von 50

## Patentansprüche

1. Linearantrieb (1), aufweisend
- mindestens eine Schiene (10), die entlang einer Längsachse (L) orientiert ist und mindestens eine ein Zahnprofil (21) bildende Kulisse (20) aufweist, die zwei gegenüberliegende Profilflächen (25, 26) umfasst,
- mindestens einen Schieber (30), der quer zur Längsachse (L) beweglich ist und in die mindestens eine Kulisse (20) greift, und
- eine Antriebswelle (50),
- wobei der mindestens eine Schieber (30) mit der Antriebswelle (50) derart trieblich gekoppelt ist, dass der jeweilige Schieber (30) mindestens eine zyklische Bewegung im Verlauf einer Umdrehung der Antriebswelle (50) vornimmt und sich dabei in der mindestens einen Kulisse (20) zum Erzeugen eines Vortriebes in einer Richtung der Längsachse (L) abwechselnd an den gegenüberliegenden Profilflächen (25, 26) abschieben kann,
- wobei der jeweilige Schieber (30) mindestens einen Pin (32) umfasst,
**dadurch gekennzeichnet, dass**
ein Abstand zwischen den gegenüberliegenden Profilflächen (25, 26) der Kulisse (20) näherungsweise der Größe des mindestens einen Pin (32) entspricht.

2. Linearantrieb (1) nach Anspruch 1,
**dadurch gekennzeichnet, dass** mindestens zwei Schieber (30) vorgesehen sind, und dass die zyklische Bewegung der mindestens zwei Schieber (30) gegenüber der Kulisse (20) mit einem Phasenversatz erfolgt.

3. Linearantrieb (1) nach Anspruch 1 oder 2,
**dadurch gekennzeichnet, dass**
das Zahnprofil (21) der Kulisse (20) einen zickzackförmigen oder wellenförmigen Verlauf aufweist.

4. Linearantrieb (1) nach einem der vorgenannten Ansprüche,
**dadurch gekennzeichnet, dass**
ein Abstand zwischen den gegenüberliegenden Profilflächen (25, 26) gleichbleibend ist.

5. Linearantrieb (1) nach einem der vorgenannten Ansprüche,
**dadurch gekennzeichnet, dass**
die Kulisse (20) als Nut oder Durchbrechung in der mindestens einen Schiene (10) ausgebildet ist.

6. Linearantrieb (1) nach einem der vorgenannten Ansprüche,
**dadurch gekennzeichnet, dass**
der jeweilige Schieber (30) mindestens zwei Pins (32) umfasst.

7. Linearantrieb (1) nach einem der vorgenannten Ansprüche,
**dadurch gekennzeichnet, dass**
der mindestens eine Pin (32) mindestens eine Reibfläche (33) aufweist, die an den gegenüberliegenden Profilflächen (25, 26) zum Erzeugen eines Vortriebes in Wirkkontakt kommen kann.

8. Linearantrieb (1) nach einem der vorgenannten Ansprüche,,
**dadurch gekennzeichnet, dass**
die mindestens eine Reibfläche (33) mit der Form eines Zahngrundes (28) des Zahnprofils (21) korrespondiert.

9. Linearantrieb (1) nach einem der vorgenannten Ansprüche,
**dadurch gekennzeichnet, dass**
der mindestens eine Pin (32) derart bemessen ist, dass gegenüberliegende Seiten der Pin (32) mit gegenüberliegenden Profilflächen (25, 26) in Wirkkontakt stehen.

10. Linearantrieb (1) nach einem der vorgenannten Ansprüche,
**dadurch gekennzeichnet, dass**
der mindestens eine Pin (32) im Querschnitt quader-, rauten- oder zylinderförmig ausgebildet ist.

11. Linearantrieb (1) nach einem der vorgenannten Ansprüche,
**dadurch gekennzeichnet, dass**
der jeweilige Schieber (30) und/oder die Kulisse (20) symmetrisch ausgebildet sind bzw. ist.

12. Linearantrieb (1) nach einem der vorgenannten Ansprüche,
**dadurch gekennzeichnet, dass**
die Antriebswelle (50) außerhalb der Kulisse (20) angeordnet ist.

13. Linearantrieb (1) nach einem der vorgenannten Ansprüche,
**dadurch gekennzeichnet, dass**
die Antriebswelle (50) in einer Ebene parallel und beabstandet von der Schienenebene angeordnet ist, oder dass die Antriebswelle (50) in einer Ebene parallel und beabstandet zu einer Ebene senkrecht zu der Schienenebene angeordnet ist.

14. Linearantrieb (1) nach einem der Ansprüche 3 bis 13 in Kombination mit Anspruch 2,
**dadurch gekennzeichnet, dass** mindestens eine zweite Kulisse (20) vorgesehen ist und dass mindestens einer der zwei Schieber (30) in die zweite Kulisse (20) greift.

15. Linearantrieb (1) nach Anspruch 14,
**dadurch gekennzeichnet, dass** die mindestens eine zweite Kulisse (20) in der Schienenebene (E) oder zumindest in einer Ebene parallel zu der Schienenebene (E) angeordnet ist.

16. Linearantrieb (1) nach einem der Ansprüche 14 oder 15, **dadurch gekennzeichnet, dass**
die mindestens eine zweite Kulisse (20) in einer zweiten Schiene (10) angeordnet ist.

17. Linearantrieb (1) nach einem der Ansprüche 3 bis 16 in Kombination mit Anspruch 2, **dadurch gekennzeichnet, dass**
die Antriebswelle (50) eine Kurbel- oder Nockenwelle umfasst und wenigstens ein Führungsmittel (52) aufweist, das die zyklische Bewegung der mindestens zwei Schieber (30) während der Umdrehung der Antriebswelle (50) vorgibt.

18. Linearantrieb (1) nach Anspruch 17
**dadurch gekennzeichnet, dass**
das mindestens eine Führungsmittel (52) derart ausgebildet ist, dass der jeweilige Schieber (30) zwischen den Wendepunkten der zyklischen Bewegung eine näherungsweise lineare Bewegung vornimmt.

19. Linearantrieb (1) nach einem der Ansprüche 3 bis 18 in Kombination mit Anspruch 2,
**dadurch gekennzeichnet, dass**
ein Gehäuse (40) vorgesehen ist, und dass an dem Gehäuse (40) die Antriebswelle (50) und wenigstens einer der mindestens zwei Schieber (30) quer zur Längsachse (L) beweglich gelagert gehalten sind.

20. Linearantrieb (1) nach einem der vorgenannten Ansprüche,
**dadurch gekennzeichnet, dass**
ein Antrieb (60) vorgesehen ist, wobei der Antrieb (60) die Antriebswelle (50) antreibt.

21. Linearantrieb (1) nach Anspruch 20,
**dadurch gekennzeichnet, dass**
in der Längsachse (L) der Antrieb (60) zwischen den mindestens zwei Schiebern (30) angeordnet ist.

22. Längsverstelleinheit (2) aufweisend einen Linearantrieb (1) nach einem der vorgenannten Ansprüche.

23. Kraftfahrzeug aufweisend einen Linearantrieb (1) nach einem der vorgenannten Ansprüche 1 bis 21.

## Claims

1. Linear drive (1), comprising
- at least one rail (10), which is oriented along a longitudinal axis (L) and comprises at least one link (20) which forms a tooth profile (21) and which comprises two opposing profile surfaces (25, 26),
- at least one slider (30), which is movable transversely to the longitudinal axis (L) and engages in the at least one link (20), and
- a drive shaft (50),
- wherein the at least one slider (30) is drivingly coupled to the drive shaft (50) in such a way that the respective slider (30) performs at least one cyclical movement in the course of one rotation of the drive shaft (50), and in the process can shift in the at least one link (20) for generating propulsion in a direction of the longitudinal axis (L), alternately at the opposing profile surfaces (25, 26),
- wherein the respective slider (30) comprises at least one pin (32),
**characterised in that** a spacing between the opposing profile surfaces (25, 26) of the link (20) approximately corresponds to the size of the at least one pin (32).

2. Linear drive (1) according to claim 1,
**characterised in that** at least two sliders (30) are provided, and that the cyclical movement of the at least two sliders (30) occurs relative to the link (20) with a phase offset.

3. Linear drive (1) according to either claim 1 or claim 2, **characterised in that** the tooth profile (21) of the link (20) has a zigzag or corrugated course.

4. Linear drive (1) according to any of the preceding claims,
**characterised in that** a spacing between the opposing profile surfaces (25, 26) remains the same.

5. Linear drive (1) according to any of the preceding claims,
**characterised in that** the link (20) is configured as a groove or aperture in the at least one rail (10).

6. Linear drive (1) according to any of the preceding claims,
**characterised in that** the respective slider (30) comprises at least two pins (32).

7. Linear drive (1) according to any of the preceding claims,
**characterised in that** the at least one pin (32) comprises at least one friction surface (33), which can come into active contact on the opposing profile surfaces (25, 26) for generating a propulsion.

8. Linear drive (1) according to any of the preceding claims,
**characterised in that** the at least one friction surface (33) corresponds to the shape of a tooth base (28) of the tooth profile (21).

9. Linear drive (1) according to any of the preceding claims,
**characterised in that** the at least one pin (32) is dimensioned in such a way that opposing sides of the pin (32) are in active contact with opposing profile surfaces (25, 26).

10. Linear drive (1) according to any of the preceding claims,
**characterised in that** the at least one pin (32) is configured to be square, rhomboid or cylindrical in cross-section.

11. Linear drive (1) according to any of the preceding claims,
**characterised in that** the respective slider (30) and/or the link (20) is or are configured symmetrically.

12. Linear drive (1) according to any of the preceding claims,
**characterised in that** the drive shaft (50) is arranged outside the link (20).

13. Linear drive (1) according to any of the preceding claims,
**characterised in that** the drive shaft (50) is arranged in a plane in parallel with and spaced apart from the rail plane, or **in that** the drive shaft (50) is arranged in a plane in parallel with and spaced apart from a plane perpendicular to the rail plane.

14. Linear drive (1) according to any of claims 3 to 13 in combination with claim 2,
**characterised in that** at least one second link (20) is provided and that at least one of the two sliders (30) engages in the second link (20).

15. Linear drive (1) according to claim 14,
**characterised in that** the at least one second link (20) is arranged in the rail plane (E) or at least in a plane in parallel with the rail plane (E).

16. Linear drive (1) according to either claim 14 or claim 15,
**characterised in that** the at least one second link (20) is arranged in a second rail (10).

17. Linear drive (1) according to any of claims 3 to 16 in combination with claim 2,
**characterised in that** the drive shaft (50) includes a crankshaft or camshaft and comprises at least one guide means (52) which specifies the cyclical movement of the at least two sliders (30) during the rotation of the drive shaft (50).

18. Linear drive (1) according to claim 17,
**characterised in that** the at least one guide means (52) is configured in such a way that the respective slider (30) performs an approximately linear movement between the turning points of the cyclical movement.

19. Linear drive (1) according to any of claims 3 to 18 in combination with claim 2,
**characterised in that** a housing (40) is provided, and **in that** the drive shaft (50) and at least one of the at least two sliders (30) are held on the housing (40) in a manner mounted so as to be movable transversely to the longitudinal axis (L).

20. Linear drive (1) according to any of the preceding claims,
**characterised in that** a drive (60) is provided, wherein the drive (60) drives the drive shaft (50).

21. Linear drive (1) according to claim 20,
**characterised in that** the drive (60) is arranged between the at least two sliders (30), in the longitudinal axis (L).

22. Longitudinal adjustment unit (2) comprising a linear drive (1) according to any of the preceding claims.

23. Motor vehicle comprising a linear drive (1) according to any of the preceding claims 1 to 21.

## Revendications

1. Entraînement (1) linéaire comportant
- au moins un rail (10), qui est orienté suivant un axe (L) longitudinal et qui a au moins une coulisse (20) formant un profil (21) denté, qui comprend deux surfaces (25, 26) profilées opposées,
- au moins un coulisseau (30), qui est mobile, transversalement à l'axe (L) longitudinal et qui pénètre dans la au moins une coulisse (20), et
- un arbre (50) d'entraînement,
- dans lequel le au moins un coulisseau (30) est accouplé en entraînement à l'arbre (50) d'entraînement de manière à ce que le coulisseau (30) respectif effectue au moins un mouvement cyclique au cours d'une rotation de l'arbre (50) d'entraînement et puisse ainsi coulisser en alternance sur les surfaces (25, 26) profilées opposées dans la au moins une coulisse (20), pour produire un mouvement d'avancement dans une direction de l'axe (L) longitudinal,
- dans lequel le coulisseau (30) respectif comprend au moins un ergot (32),
**caractérisé en ce qu'**
une distance entre les surfaces (25, 26) profilées opposées de la coulisse (20) correspond à peu près à la dimension d'au moins un ergot (32).

2. Entraînement (1) linéaire suivant la revendication 1, **caractérisé en ce qu'**
il est prévu au moins deux coulisseaux (30) et **en ce que** le mouvement cyclique d'au moins deux coulisseaux (30) par rapport à la coulisse (20) s'effectue avec un déphasage.

3. Entraînement (1) linéaire suivant la revendication 1 ou 2, **caractérisé en ce que**
le profil (21) denté de la coulisse (20) a un tracé en zigzag ou ondulé.

4. Entraînement (1) linéaire suivant l'une des revendications précédentes,
**caractérisé en ce que**
une distance entre les surfaces (25, 26) profilées opposées reste constante.

5. Entraînement (1) linéaire suivant l'une des revendications précédentes,
**caractérisé en ce que**
la coulisse (20) est constituée sous la forme d'une rainure ou d'une découpure dans au moins un rail (10).

6. Entraînement (1) linéaire suivant l'une des revendications précédentes,
**caractérisé en ce que**
le coulisseau (30) respectif comprend au moins deux ergots (32).

7. Entraînement (1) linéaire suivant l'une des revendications précédentes,
**caractérisé en ce qu'**
au moins un ergot (32) a au moins une surface (33) de frottement, qui peut venir en contact actif sur les surfaces (25, 26) profilées opposées pour la production d'un avancement.

8. Entraînement (1) linéaire suivant l'une des revendications précédentes,
**caractérisé en ce que**
la au moins une surface (33) de frottement correspond à la forme du fond (28) de dent du profil (21) denté.

9. Entraînement (1) linéaire suivant l'une des revendications précédentes,
**caractérisé en ce que**
le au moins un ergot (32) est tel que des faces opposées de l'ergot (32) soient en contact actif avec des surfaces (25, 26) profilées opposées.

10. Entraînement (1) linéaire suivant l'une des revendications précédentes,
**caractérisé en ce que**
au moins un ergot (32) a en section transversale, une forme parallélépipédique, en losange ou cylindrique.

11. Entraînement (1) linéaire suivant l'une des revendications précédentes,
**caractérisé en ce que**
le coulisseau (30) respectif et/ou la coulisse (20) sont ou est de constitution symétrique.

12. Entraînement (1) linéaire suivant l'une des revendications précédentes,
**caractérisé en ce que**
l'arbre (50) d'entraînement est disposé à l'extérieur de la coulisse (20).

13. Entraînement (1) linéaire suivant l'une des revendications précédentes,
**caractérisé en ce que**
l'arbre (50) d'entraînement est disposé dans un plan parallèle au plan du rail et à distance de celui-ci, ou **en ce que** l'arbre (50) d'entraînement est disposé dans un plan parallèle et à distance d'un plan perpendiculaire au plan du rail.

14. Entraînement (1) linéaire suivant l'une des revendications 3 à 13 en combinaison avec la revendication 2,
**caractérisé en ce qu'**
il est prévu au moins une deuxième coulisse (20) et **en ce qu'**au moins l'un des deux coulisseaux (30) pénètre dans la deuxième coulisse (20).

15. Entraînement (1) linéaire suivant la revendication 14, **caractérisé en ce que**
la au moins une deuxième coulisse (20) est disposée dans le plan (E) du rail ou du moins dans un plan parallèle au plan (E) du rail.

16. Entraînement (1) linéaire suivant l'une des revendications 14 ou 15,
**caractérisé en ce que**
la au moins une deuxième coulisse (20) est disposée dans un deuxième rail (10).

17. Entraînement (1) linéaire suivant l'une des revendications 3 à 16 en combinaison avec la revendication 2,
**caractérisé en ce que**
l'arbre (50) d'entraînement comprend un arbre à manivelle ou à came et a au moins un moyen (52) de guidage, qui prescript le mouvement cyclique au moins des deux coulisseaux (30) pendant la rotation de l'arbre (50) d'entraînement.

18. Entraînement (1) linéaire suivant la revendication 17, **caractérisé en ce que**
le au moins un moyen (52) de guidage est constitué de manière à ce que le coulisseau (30) respectif effectue un mouvement à peu près linéaire entre les points de retour du mouvement cyclique.

19. Entraînement (1) linéaire suivant l'une des revendications 3 à 18 en combinaison avec la revendication 2,
**caractérisé en ce qu'**
il est prévu un carter (40) et **en ce que** sur le carter (40) sont retenus, en étant mobiles transversalement à l'axe (L) longitudinal, l'arbre (50) d'entraînement et au moins l'un des deux coulisseaux (30).

20. Entraînement (1) linéaire suivant l'une des revendications précédentes,
**caractérisé en ce qu'**
il est prévu un entraînement (60), dans lequel l'entraînement (60) entraîne l'arbre (50) d'entraînement.

21. Entraînement (1) linéaire suivant la revendication 20, **caractérisé en ce que**,
suivant l'axe (L) longitudinal, l'entraînement (60) est disposé entre les au moins deux coulisseaux (30).

22. Unité (2) de réglage longitudinal comportant un entraînement (1) linéaire sur l'une des revendications précédentes.

23. Véhicule automobile comportant un entraînement (1) linéaire suivant l'une des revendications 1 à 21 précédentes.
